# EUROPÄISCHE PATENTSCHRIFT

(11) **EP 1 294 103 B1**
(45) Veröffentlichungstag und Bekanntmachung des Hinweises auf die Patenterteilung: **10.05.2006**
(21) Anmeldenummer: 02102102.7
(22) Anmeldetag: 07.08.2002
(51) Int. Cl.: H04B 1/10, H04L 25/08

(54) **Anordnung zur einstellbaren Filterung eines HF-Signals**
Arrangement for adjustably filtering a HF-signal
Agencement pour le filtrage réglable d'un signal à haute fréquence

(30) Priorität: 09.08.2001 DE 10139274
(43) Veröffentlichungstag der Anmeldung: 19.03.2003
(73) Patentinhaber: Philips Intellectual Property & Standards GmbH, 20099 Hamburg (DE); Koninklijke Philips Electronics N.V., 5621 BA Eindhoven (NL)
(72) Erfinder: de Zeeuw, Stephan, Postfach 50 04 42, 52088 Aachen (DE); Böh, Frank, Postfach 50 04 42, 52088 Aachen (DE)
(74) Vertreter: Volmer, Georg

(56) Entgegenhaltungen:
- EP-A- 0 327 767
- WO-A-99/33176

## Beschreibung

Die Erfindung betrifft eine Anordnung zur einstellbaren Filterung eines in das Basisband umgesetzten HF-Signals, bei dem es sich insbesondere um ein UHF- oder VHF-Signal handelt. Das Signal enthält Funkdaten, welche in dem Basisbandsignal mittels zwei Vorfiltern und einem nachgeschalteten Komparator gefiltert und in ein digitales Signal umgesetzt werden.

Das Basisbandsignal wird einer Vorfilterung unterzogen und dem nichtinvertierenden Eingang des Komparators zugeführt. Ferner wird das Basisbandsignal mittels eines RC-Gliedes gefiltert und an den invertierenden Eingang des Komparators geführt. Dieser RC-Filter hat die Aufgabe, eine adaptive Schwelle für den Komparator zur Verfügung zu stellen. Aus beiden Signalen wird mittels des Komparators durch Vergleich das digitale Ausgangssignal gewonnen.

Bei derartigen, nach dem Stande der Technik bekannten Anordnungen besteht das Problem, dass die Grenzfrequenzen sowohl des Vorfilters vor dem nicht invertierenden Eingang wie auch des RC-Filters vor dem invertierenden Eingang des Komparators auf die Datenrate bzw. Frequenz der Daten in dem Basisbandsignal adaptiert werden müssen. Wird nämlich die Grenzfrequenz dieser beiden Filter zu tief gewählt, so ist eine Digitalisierung der Daten nur noch mit erheblich niedrigerer Grenzfrequenz des Empfängers möglich. Werden die Grenzfrequenzen dagegen zu hoch gewählt, tritt verstärkt digitales Rauschen am Datenausgang auf. Dieses kann aber bei nachfolgenden Auswerteinheiten nicht störungsfrei interpretiert werden und zu Störungen bzw. Protokollverletzungen führen.

Daher weisen derartige Anordnungen nach dem Stande der Technik entweder den Nachteil auf, dass eine verringerte Empfänglichkeit des Empfängers oder eine erhöhte Datenrate in Kauf genommen werden muss oder, wenn dies nicht zulässig ist, kann der Empfänger nur für Signale mit einer bestimmten Datenrate eingesetzt werden und ist somit nicht flexibel für verschiedene Anwendungen einsetzbar.

Es ist Aufgabe der Erfindung eine Anordnung der eingangs genannten Art anzugeben, welche universell für Signale mit verschiedenen Datenraten einsetzbar ist und welche dennoch, auch bei verschiedenen Datenraten in dem Basisbandsignal ein gefiltertes Ausgangssignal liefert, welches geringes, digitales Rauschen aufwist.

Diese Aufgabe ist erfindungsgemäß durch die Merkmale des Patentanspruchs 1 gelöst:

Anordnung zur einstellbaren Filterung eines in das Basisband umgesetzten HF-Signals, insbesondere UHF/VHF-Signals, welches Funkdaten enthält und welches in der Anordnung zwei Vorfiltern und einem nachgeschalteten Komparator zugeführt wird, mit einem dem Komparator nachgeschalteten Glitschfilter, welcher das Ausgangssignal der Anordnung liefert und digitales Rauschen in dem digitalen Ausgangssignal des Komparators entfernt, wobei zur Verarbeitung von Basisbandsignalen mit verschiedenen Bitraten die Vorfilter auf eine maximale Datenrate ausgelegt sind und wobei das Glitschfilter auf die tatsächlich auftretende Datenrate dadurch einstellbar ist, dass es solche Flanken des ihm zugeführten Signals nicht auf das Ausgangssignal passieren lässt, die einer vorher aufgetreten Flanke vor Ablauf einer vorgebbaren, an die Datenrate der Funkdaten anpassbaren Dauer folgen.

Das die Funkdaten enthaltende Hochfrequenz-Signal wird in das Basisband umgesetzt. Dieses Basisbandsignal wird mittels zwei Vorfiltern vorgefiltert und dann zwei Eingängen eines nachgeschalteten Komparators zugeführt. Der Komparator formt aus den beiden analogen Eingangssignalen, von denen eines eine Art adaptive Schaltschwelle darstellt, ein digitales Ausgangssignal.

Dieses wird in der erfindungsgemäßen Anordnung einem nachgeschalteten Glitschfilter zugeführt. Bei diesem Glitschfilter handelt es sich um ein digitales Filter, welches digitales Rauschen aus dem Ausgangssignal des Komparators entfernt.

Die beiden Vorfilter sind dabei bzgl. ihrer Grenzfrequenzen so ausgelegt, dass sie Funkdaten in dem Basisbandsignal mit der maximal höchsten auftretenden Frequenz noch mit hinreichender Empfindlichkeit verarbeiten können. Im Grunde genommen sind also die beiden Vorfilter auf die maximal mögliche Funkdatenrate in dem Basisband ausgelegt. Treten die Funkdaten mit geringerer Frequenz auf, so können - wie oben beschrieben - diese Filter nicht mehr optimal arbeiten, und in dem Ausgangssignal des Komparators tritt digitales Rauschen auf, d.h., es treten Übergänge zwischen den beiden Zuständen auf, bei denen es sich um Rauschen handelt und die nicht ein Datenbit repräsentieren.

Um derartiges, ggf. auftretendes digitales Rauschen zu beseitigen, ist das Glitschfilter vorgesehen, das so ausgelegt ist, dass es auf die tatsächlich auftretende Datenrate der Funkdaten in dem Basisbandsignal einstellbar ist. Dies bedeutet, dass das Glitschfilter solche Flanken zwischen zwei digitalen Zuständen nicht passieren lässt, die während einer vorgebbaren Dauer nach einem vorhergehenden Flankenwechsel bzw. Zustandswechsel folgen. Nur solche Flankenwechsel werden weitergegeben, die zeitlich mit einem größeren Abstand als der vorgebbaren Dauer einem anderen Flankenwechsel folgen.

Damit werden Übergänge zwischen den zwei digitalen Zuständen dieses Signals, die tatsächlich nicht ein Bit der Funkdaten in dem Basisbandsignal repräsentieren, unterdrückt.

Somit ist die erfindungsgemäße Anordnung für Basisbandsignale einsetzbar, die Funkdaten mit verschiedener Datenfrequenz enthalten. Für relativ hohe Funkdatenfrequenzen werden die beiden analogen Vorfilter schon relativ gut arbeiten, und es werden im Ausgangssignal des Komparators relativ wenig Störungen auftreten. Die noch auftretenden Störungen werden von dem Glitschfilter beseitigt. Für relativ niedrige Datenfrequenzen der Funkdaten werden die beiden Vorfilter zunehmend ungünstiger arbeiten; dieses wird jedoch durch das Glitschfilter ausgeglichen, das auf die Datenfrequenz einstellbar ist und das digitale Rauschen in dem Ausgangssignal des Komparators beseitigt.

Somit ist die erfindungsgemäße Anordnung für Funkdaten verschiedener Frequenzen einsetzbar und liefert ihnen im Fall ein von digitalem Rauschen befreites, gefiltertes Ausgangssignal.

Die Anpassung der Anordnung an verschiedene Datenraten der Funkdaten in dem Basisbandsignal wird durch Einstellung des Glitschfilters vorgenommen, wobei der vorgebbare Wert, der bestimmt, welche Impulse das Glitschfilter passieren können, einstellbar ist und somit an die Datenrate der Funkdaten anpassbar ist.

Eine Ausgestaltung der Erfindung nach Anspruch 2 hat einen Glitschfilter zum Gegenstand, das einen Flankendetektor, eine Timerschaltung und ausgangsseitig ein Flip-Flop aufweist. Das D-Flip-Flop wird durch das Ausgangssignal des Komparators nur dann neu gesetzt, wenn es getaktet wird. Das Taktsignal wird jedoch mittels des Flankendetektors und der Timerschaltung so generiert, dass ein Zustandswechsel in dem Taktsignal durch eine Flanke in dem Ausgangsagnal des Komparators nur dann ausgelöst wird, wenn vor dieser Flanke vorher während der vorgebbaren Dauer keine weitere Flanke aufgetreten ist. Dies wird dadurch erreicht, dass die Timerschaltung mit jeder auftretenden Flanke neu gesetzt wird und danach alle Flanken bzw. alle zu diesen gehörenden Zustandswechsel unterdrückt werden. Erst wenn die vorgebbare Dauer abgelaufen ist und in dieser Zeit keine weitere Flanke aufgetreten ist, wird die nächste Flanke bzw., der zu ihr gehörende Zustandswechsel an den Takteingang des D-Flip-Flops weitergegeben.

In dieser Anordnung wird die Anpassung an die Datenrate durch die Timerschaltung erreicht, innerhalb der die vorgrobare Dauer leicht einstellbar ist und somit eine einfache Anpassung an die Datenrate der Funkdaten vorgenommen werden kann, wie gemäß einer weiteren Ausgestaltung der Erfindung nach Anspruch 3 vorgesehen ist.

Zur Verbesserung der Filterwirkung können ggf., wie gemäß einer wateren Ausgestaltung der Erfindung nach Anspruch 4 vorgesehen ist, zwei hintereinander geschaltete Glitschfilter dieser Bauart vorgesehen sein.

Die Timerschaltung kann, wie gemäß einer weiteren Ausgestaltung der Erfindung nach Anspruch 5 vorgesehen ist, mittels eines digitalen Zählers realisiert sein, der ein ihm zugeführtes Taktsignal zählt. Dabei repräsentiert dann der zu erreichende Zählerstand die vorgebbare Dauer.

Gemäß einer weiteren Ausgestaltung der Erfindung nach Anspruch 6 kann die Anordnung in wenigstens zwei Komponenten, beispielsweise einem Empfänger und einem Controller realisiert sein. Dabei können insbesondere die analogen Elemente, also die Vorfilter und der Komparator beispielsweise in dem Empfänger und das digitale Glitschfilter in dem Controller realisiert sein.

Gemäß einer weiteren Ausgestaltung der Erfindung gemäß Anspruch 7 ist ein erstes Vorfilter vorgesehen, dass das Basisbandsignal vorfiltert und dem nicht invertierenden Eingang des Komparators zurührt. Dem invertierenden Eingang des Komparators ist ein zweites Vorfilter, bei dem es sich beispielsweise um ein einfaches RC Filter handeln kann, vorgeschaltet, welches so ausgelegt ist, dass es das Basisbandsignal einer Tiefpassfilterung unterzieht und ausgangsseitig eine Amplitude entsprechend dem Mittelwert, der in dem Basisbandsignal auftretenden Amplituden aufweist. Auf diese Weise kann mittels des Komparators aktuell jederzeit eine Entscheidung vorgenommen werden, ob das vorgefilterte, seinem nicht invertierenden Eingang zugeführte Signal oberhalb oder unterhalb dieser Schaltschwelle liegt.

Die erfindungsgemäße Anordnung ist vorteilhaft, wie gemäß einer weiteren Ausgestaltung der Erfindung nach Anspruch 8 vorgesehen ist, für Zugangssysteme einsetzbar, bei denen in einem UHF- oder VHF-Signal Funkdaten übertragen werden. Derartige Systeme werden beispielsweise für Fahrzeug- Alarmanlagen oder Zugangssysteme zu bestimmten Räumen eingesetzt. Die erfindungsgemäße Anordnung kann dabei für Funkdaten verschiedener Frequenzen eingesetzt werden; beispielsweise ist ein integrierter Schaltkreis, in dem die erfindungsgemäße Anordnung vorgesehen ist, für verschiedene Anwendungen einsetzbar, in denen Funkdaten verschiedener Frequenzen eingesetzt werden.

Nachfolgend wird ein Ausführungsbeispiel der Erfindung anhand der Zeichnung näher erläutert. Es zeigen:
- Figur 1: ein Prinzipschaltbild der erfindungsgemäßen Anordnung zur einstellbaren Filterung und
- Figur 2: ein Beispiel für ein Ausgangssignal des Komparators der Anordnung gemäß Figur 1.

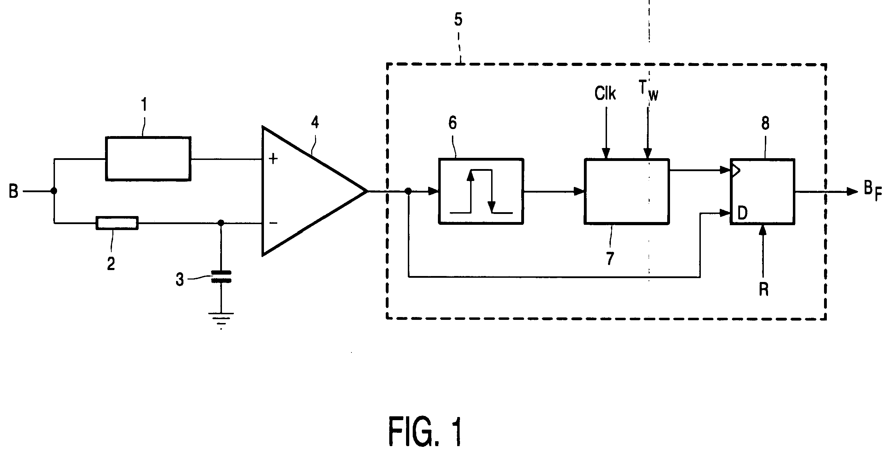

In Figur 1 ist ein Prinzipschaltbild der erfindungsgemäßen Anordnung dargestellt, dem eingangsseitig ein Basisbandsignal B zugeführt wird, bei dem es sich um ein in das Basisband umgesetztes UHF-/VHF-Signal handelt, das Funkdaten enthält. Bei diesen Funkdaten kann es sich beispielsweise um solche für Zugangssysteme, für Kraftfahrzeuge oder ähnliches handeln.

Je nach Anwendung können dabei die Funkdaten in verschiedenen Datenraten, also verschiedenen Frequenzen, auftreten.

Bei dem Basisbandsignal handelt es sich zunächst um ein analoges Signal, das aus dem UHF-/VHF-Signal durch Umsetzung gewonnen wird.

In der erfindungsgemäßen Anordnung gemäß Figur 1 wird das Basisbandsignal zwei Vorfiltern 1 und 2 zugeführt.

Das erste Vorfilter 1 ist einem nicht invertierenden Eingang eines Komparators 4 vorgeschaltet und nimmt eine analoge Vorfilterung des Basisbandsignals vor. Diese Vorfilterung mittels des ersten Vorfilters 1 kann beispielsweise mittels eines einfachen RC-Gliedes vorgenommen werden, das bzgl. seiner Grenzfrequenz so ausgelegt ist, dass Funkdaten mit der maximalen auftretenden Frequenz das Vorfilter 1 noch passieren können, d.h. also, dass die Datenbits in dem Signal noch erhalten bleiben.

Hingegen ist das zweite Vorfilter, bei dem es sich ebenfalls um ein Tiefpassfilter handelt und das aus einem Widerstand 2 und einer Kapazität 3 aufgebaut ist, so ausgelegt, dass es eine relativ niedrige Ganzfrequenz aufweist, so dass einem zweiten, invertierenden Eingang des Komparators 4 eine Art Schaltschwelle zugeführt wird. Das Ausgangssignal des zweiten Vorfilters 2 und 3 weist nämlich einen Wert entsprechend dem Mittelwert, der in dem Basisband auftretenden Signale auf und stellt somit eine Art Schaltschwelle dar.

In dem Basisbandsignal werden zwar Funkdaten übertragen, es handelt sich bei dem Basisbandsignal jedoch zunächst um ein analoges Signal. Dieses soll mittels des Komparators 4 in ein digitales Signal umgesetzt werden. Hierzu liefert das zweite Vorfilter mit dem Widerstand 2 der Kapazität 3 eine Schaltschwelle, so dass der Komparator 4 dann ein Ausgangssignal liefert, wenn das von dem ersten Vorfilter gelieferte Signal die Schaltschwelle überschreitet und dann kein Ausgangssignal liefert, wenn dieses Signal die Schaltschwelle unterschreitet.

Somit liefert der Komparator 4 ausgangsseitig bereits ein digitales Signal, das die Funkdaten enthält.

Das Problem der analogen Vorfilterung mittels der beiden Vorfilter 1 einerseits und 2 und 3 andererseits besteht darin, dass die Grenzfrequenzen dieser Filter an die Datenrate der Funkdaten in dem Basisbandsignal angepasst werden müssen. Insbesondere das erste Vorfilter 1 muss bzgl. seiner Grenzfrequenz exakt so ausgelegt sein, dass es einerseits dem Verlauf des Datensignals in dem Bassbandsgial folgen kann, dass es aber andererseits eine hinreichende Unterdrückung von Störungen in diesem Signal vornimmt.

Bei Anordnungen nach dem Stand der Technik müssen daher die beiden Vorfilter tatsächlich an die Frequenzen der in dem Basisbandsignal B auftretenden Funkdaten angepasst werden. Bei der erfindungsgemäßen Anordnung gemäß der Figur 1 ist dies nicht erforderlich; vielmehr werden die beiden Vorfilter, insbesondere das erste Vorfilter 1, bzgl. ihrer Grenzfrequenzen auf die maximal mögliche auftretende Datenrate der Funkdaten in dem Basisbandsignal ausgelegt. Dies führt dazu, dass bei Funkraten relativ niedriger Frequenzen eine nicht mehr hinreichende Störunterdrückung auftritt und in dem Ausgangssignal des Komparators 4 digitales Rauschen auftritt. Bei dem digitalen Rauschen handelt es sich um Übergänge zwischen den beiden digitalen Zuständen, die nicht Datenbits sondern Störungen repräsentieren.

Um diese Störungen in dem Ausgangssignals des Komparators 4 zu unterdrücken, ist in diesem ein Glitschfilter 5 nachgeschaltet, welches digital arbeitet und welches ausgangsseitig ein von diesen Störungen befreites Basisbandsignal B_{F} liefert.

In dem Glitschfilter ist ein Flankendetektor 6 vorgesehen, welchem eingangsseitig das Ausgangssignal des Komparators 4 zugeführt wird. Der Flankendetektor identifiziert Flanken in diesem Signal und liefert entsprechend ein Signal an eine Timerschaltung 7. Die Timerschaltung 7 wird mittels eines Taktsignals Clk getaktet und erhält ferner ein Signal, welches eine vorgebbare Dauer signalisiert und welches in der Figur mit T_{W} gekennzeichnet ist. Mittels des Signals T_{W} ist die Timerschaltung einstellbar.

Wird von dem Flankendetektor 6 eine Flanke erkannt und entsprechend an die Timerschaltung 7 ein Signal gegeben, so gibt die Timerschaltung 7 die Flanke, d.h. den Zustandswechsel an einen Takteingang eines nachgeschalteten FD-Flip-Flops 8 weiter. Ferner läuft in der Timerschaltung 7 beispielsweise ein digitaler Zähler los. Wird innerhalb der vorgebbaren Dauer, die durch das Signal T_{W} eingestellt wird, ein weiterer Impuls von dem Flankendetektor 6 an die Timerschaltung 7 signalisiert, so wird der zweite Impuls unterdrückt, d.h. die Timerschaltung 7 liefert kein Ausgangssignal an ein nachgeschaltetes D-Flip-Flop 8. Mit jeder Flanke, die von dem Flankendetektor 6 geliefert wird, wird die Timerschaltung 7 neu gesetzt, so dass nach diesem Setzen eine während der vorgebbaren Dauer auftretende folgende Flanke unterdrückt wird.

Erst wenn die vorgebbare Dauer abgelaufen ist und in dieser Zeit keine weitere Flanke aufgetreten ist, wird die nächste Flanke bzw. der zu ihr gehörende Zustandswechsel an den Takteingang des D-Flip-Flops weitergegeben. Allerdings wird dabei die Timerschaltung 7 wieder neu gesetzt.

Nur dann, wenn die Dauer zwischen zwei Impulsen die vorgebbare Dauer überschreitet, wird ein entsprechendes Ausgangssignal an den Takteingang des D-Flip-Flops 8 gegeben.

Das D-Flip-Flop 8 wird mittels des Ausgangssignals des Komparators 4 gesetzt, dh dessen Ausgang ist mit dem D-Eingang des D-Flip-Flops 8 gekoppelt. Das D-Flip-Flop 8 ist mittels eines Rücksetzsignals R rücksetzbar.

Das Glitschfilter arbeitet also im Ergebnis so, dass Flanken nur dann übernommen werden, wenn keine Flanke innerhalb der einstellbaren vorgebbaren Dauer T_{W} folgt. Damit erfolgt eine Unterdrückung des digitalen Rauschens.

Die vorgebbare Dauer ist mittels des Signals T_{W} einstellbar, so dass auf einfache Weise eine Anpassung an die Datenrate der Funkdaten in dem Basisbandsignal erfolgen kann. Insbesondere bei solchen Datenraten, die die Grenzfrequenz der Vorfilter deutlich unterschreiten, wird ein derartiges digitales Rauschen in dem Ausgangssignal des Komparators 4 vermehrt auftreten. Dieses digitale Rauschen wird dann jedoch mittels des einstellbaren Glitschfilters optimal beseitigt.

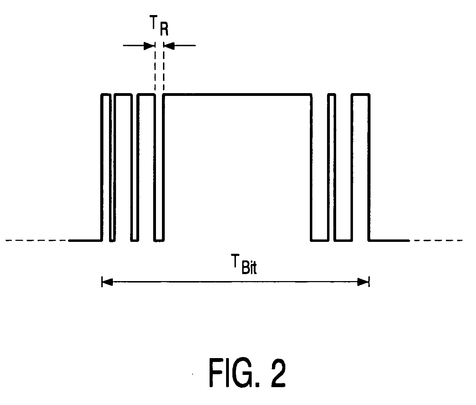

Die Darstellung in Figur 2 zeigt über der Zeit dargestellt einen Verlauf des Ausgangssignals des Komparators 4 der Anordnung gemäß Figur 1, wie er genau bei der Konstellation auftreten kann, dass die Datenrate der Funkdaten deutlich unterhalb der Grenzfrequenz der Vorfilter liegt.

In Figur 2 ist ein zeitlicher Ausschnitt eines Ausgangssignals des Komparators dargestellt, in dem ein Bit erscheint. Im Bereich der Vorder- und Hinterflanke des Bits treten jedoch mehrere Übergänge zwischen den beiden digitalen Zuständen auf, bei denen es sich um digitales Rauschen handelt.

Die Datenbits des Signals weisen eine relativ große Dauer auf, die in der Figur T_{Bit} gekennzeichnet ist. Hier weisen die Übergänge zwischen den beiden digitalen Zuständen, die durch Rauschen verursacht sind, relativ kurze Abstandszeiten, beispielsweise T_{R}, zueinander auf.

Durch die erfindungsgemäße Anordnung gemäß Figur 1 wird in dem Glitschfilter durch die Timerschaltung einer Unterdrückung eben dieser Flanken stattfinden. Dies wird dadurch erreicht, dass die vorgebbare Dauer T_{W} so eingestellt wird, dass sie für das Beispielsignal gemäß Figur 2 zwischen der Dauer T_{Bit} der Bits der Funkdaten einerseits und der Dauer T_{R}, der in dem digitalen Rauschen auftretenden Übergänge zwischen den digitalen Zuständen liegt. Damit wird für die Darstellung gemäß Figur 2 erreicht, dass einerseits das Datenbit noch erkannt wird, dass andererseits die an seiner Vorder- und Hinterflanke auftretenden Übergänge, bei denen es sich lediglich um digitales Rauschen handelt, unterdrückt werden, da deren Dauer T_{R} unterhalb der vorgebbaren Dauer T_{W} liegt.

Auch die Darstellung gemäß Figur 2 macht deutlich, daß durch die Wahl der vorgebbaren Dauer eine Anpassung an verschiedene Datenraten der Funkdaten und somit an verschiedene Breiten T_{Bit} der Funkdaten auf einfache Weise möglich ist, nämlich durch geeignete und an die Dauer T_{Bit} angepasste Wahl des Wertes der vorgebbaren Dauer T_{W}.

Im Ergebnis ist die erfindungsgemäße Anordnung an Basisbandsignale mit Funkdaten verschiedener Datenraten leicht anpassbar und somit auch für verschiedene Einsatzbereiche geeignet.

## Patentansprüche

1. Anordnung zur einstellbaren Filterung eines in das Basisband umgesetzten HF-Signals, insbesondere UHF/VHF-Signals, welches Funkdaten enthält und welches in der Anordnung zwei Vorfiltern (1; 2,3) und einem nachgeschalteten Komparator (4) zugeführt wird, mit einem dem Komparator (4) nachgeschalteten Glitschfilter (5), welcher das Ausgangssignal der Anordnung liefert und digitales Rauschen in dem digitalen Ausgangssignal des Komparators (4) entfernt, wobei zur Verarbeitung von Basisbandsignalen mit verschiedenen Bitraten die Vorfilter (1; 2,3) auf eine maximale Datenrate ausgelegt sind und wobei das Glitschfilter auf die tatsächlich auftretende Datenrate **dadurch** einstellbar ist, dass es solche Flanken des ihm zugeführten Signals nicht auf das Ausgangssignal passieren lässt, die einer vorher aufgetretenen Flanke vor Ablauf einer vorgebbaren, an die Datenrate der Funkdaten anpassbaren Dauer folgen.

2. Anordnung nach Anspruch 1,
wobei das Glitschfilter (5) eingangsseitig einen Flankendetektor (6), eine diesem nachgeschaltete Timerschaltung (7) und ausgangsseitig ein D-Flip-Flop (8), dessen D-Eingang das Ausgangssignal des Komparators (4) zugeführt wird, aufweist, wobei in dem Ausgangssignal des Komparators (4) auftretende Flanken von dem Flankendetektor (6) erkannt werden, der ein entsprechendes Signal an die Timerschaltung (7) liefert, welche ausgangsseitig mit dem Takteingang des D-Flip-Flops (8) gekoppelt ist, wobei die Timerschaltung einen zu einer Flanke gehörenden Zustandswechsel nur dann an den Takteingang weitergibt, wenn vor dieser Flanke während der vorgebbaren Dauer keine Flanke aufgetreten ist.

3. Anordnung nach den Ansprüchen 1 und 2,
wobei die vorgebbare Dauer entsprechend der tatsächlich auftretenden Datenrate einstellbar ist.

4. Anordnung nach Anspruch 1,
wobei zwei hintereinander geschaltete Glitschfilter (5) vorgesehen sind

5. Anordnung nach Anspruch 2,
wobei die Timerschaltung (7) mittels eines digitalen Zählers realisiert ist.

6. Anordnung nach Anspruch 1,
wobei die Anordnung in wenigstens zwei Komponenten, vorzugsweise in einem Empfänger und in einem Controller realisiert ist.

7. Anordnung nach Anspruch 1,
wobei ein erstes (1) der zwei Vorfilter dem nichtinvertierenden Eingang des Komparators (4) und ein zweites Vorfilter (2,3) dem invertierenden Eingang des Komparators (4) vorgeschaltet ist, welches als Tiefpassfilter so ausgelegt ist, dass es ausgangsseitig ein Signal mit einer Amplitude entsprechend dem Mittelwert der in dem Basisbandsignal auftretenden Amplituden aufweist.

8. Anordnung nach Anspruch 1,
wobei es sich bei den Funkdaten um solche eines Zugangssystems beispielsweise eines Fahrzeugs, einer Alarmanlage oder eines Raumes handelt.

## Claims

1. An arrangement for adjustable filtering of an RF signal, particularly a UHF/VHF signal, converted in the baseband, comprising radio data and being supplied in the arrangement to two prefilters (1; 2, 3) and a subsequent comparator (4), comprising a glitch filter (5) arranged subsequent to the comparator (4), which glitch filter supplies the output signal of the arrangement and removes digital noise in the digital output signal of the comparator (4), while the prefilters (1; 2, 3) are designed for a maximum data rate for processing baseband signals with different bit rates, and the glitch filter is adjustable to the actually occurring data rates in that it does not allow those slopes of the signal applied thereto to pass in the output signal that succeed a previously occurred slope before the end of a predeterminable period which is adaptable to the data rates of the radio data.

2. An arrangement as claimed in claim 1, wherein the glitch filter (5) comprises a slope detector (6) at its input, a subsequent timer circuit (7) and a D flip-flop (8) at its output, whose D input receives the output signals from the comparator (4), in which slopes occurring in the output signal of the comparator (4) are detected by the slope detector (6) which supplies a corresponding signal to the timer circuit (7) which is coupled at its output to the clock input of the D flip-flop (8), the timer circuit passing on a change of state associated with a slope to the clock input only when, prior to this slope, no slope has occurred during the predeterminable period.

3. An arrangement as claimed in claims 1 and 2, wherein the predeterminable period is adjustable in accordance with the actually occurring data rate.

4. An arrangement as claimed in claim 1, wherein two consecutively arranged glitch filters (5) are provided.

5. An arrangement as claimed in claim 2, wherein the timer circuit (7) is realized by means of a digital counter.

6. An arrangement as claimed in claim 1, wherein the arrangement is realized in at least two components, preferably in a receiver and in a controller.

7. An arrangement as claimed in claim 1, wherein a first (1) of the two prefilters precedes the non-inverting input of the comparator (4) and a second prefilter (2, 3) precedes the inverting input of the comparator (4), which is formed as a low-pass filter in such a way that its output conveys a signal with an amplitude corresponding to the mean value of the amplitudes occurring in the baseband signal.

8. An arrangement as claimed in claim 1, wherein the radio data are data for an access system, for example, of a motor vehicle, an alarm installation or a space.

## Revendications

1. Dispositif de filtrage réglable d'un signal HF converti en bande de base, en particulier d'un signal UHF/VHF qui contient des données radio et qui est amené dans le dispositif à deux préfiltres (1; 2,3) et à un comparateur (4) monté en aval, avec un filtre Glitsch (5) monté en aval du comparateur (4) qui délivre le signal de sortie du dispositif et élimine le bruit numérique dans le signal de sortie numérique du comparateur (4), les préfiltres (1; 2,3) étant conçus à un débit de données maximal pour le traitement des signaux en bande de base avec différents débits binaires et le filtre Glitsch pouvant être réglé au débit binaire survenant effectivement par le fait qu'il ne laisse pas passer sur le signal de sortie les flancs du signal qui lui est amené suivant un flanc préalablement survenu avant l'expiration d'une durée à déterminer préalablement et adaptable au débit de données des données radio.

2. Dispositif selon la revendication 1,
dans lequel le filtre Glitsch (5) présente côté entrée un détecteur de flanc (6), un circuit temporisateur (7) monté en aval de celui-ci et, côté sortie, une bascule bistable D (8), à l'entrée D de laquelle le signal de sortie du comparateur (4) est amené, les flancs se produisant dans le signal de sortie du comparateur (4) étant reconnus par le détecteur de flancs (6) qui délivre un signal correspondant au circuit temporisateur (7) qui est couplé côté sortie à l'entrée de rythme de la bascule bistable D (8), le circuit temporisateur transmettant un changement d'état appartenant à un flanc uniquement à une entrée de rythme lorsque aucun flanc n'est constaté avant ce flanc pendant la durée à déterminer préalablement.

3. Dispositif selon l'une des revendications 1 et 2,
dans lequel la durée à déterminer préalablement est réglable en fonction du débit de données effectivement enregistré.

4. Dispositif selon la revendication 1,
dans lequel deux filtres Glitsch (5) montés successivement sont prévus.

5. Dispositif selon la revendication 2,
dans lequel le circuit temporisateur (7) est réalisé à l'aide d'un compteur numérique.

6. Dispositif selon la revendication 1,
dans lequel le dispositif est réalisé en au moins deux composants, de préférence en un récepteur et un contrôleur.

7. Dispositif selon la revendication 1,
dans lequel un premier (1) des deux préfiltres est monté en amont de l'entrée non-inversante du comparateur (4) et un deuxième préfiltre (2, 3) en amont de l'entrée inversante du comparateur (4) qui est conçu comme un filtre passe-bas de telle sorte qu'il présente côté sortie un signal avec une amplitude correspondant la valeur moyenne des amplitudes se produisant dans le signal en bande de base.

8. Dispositif selon la revendication 1,
dans lequel les données radio sont celles d'un système d'accès, par exemple d'un véhicule, d'un système d'alarme ou d'un local.
